# EUROPEAN PATENT SPECIFICATION

(11) **EP 4 309 373 B1**
(45) Date of publication and mention of the grant of the patent: **24.09.2025**
(21) Application number: 22713392.3
(22) Date of filing: 07.03.2022
(51) Int. Cl.: H04N 21/426, H04N 21/462, H04N 21/434, H04H 20/10, H04N 21/44, H04N 21/458, H04N 21/81

(54) **APPARATUS AND METHOD FOR LEVELING MAIN AND SUPPLEMENTARY AUDIO FROM A HBBTV SERVICE**
VORRICHTUNG UND VERFAHREN ZUM NIVELLIEREN VON HAUPT- UND ZUSATZAUDIO AUS EINEM HBBTV-DIENST
APPAREIL ET PROCÉDÉ DE NIVELLEMENT DE L'AUDIO PRINCIPAL ET SUPPLÉMENTAIRE D'UN SERVICE HBBTV

(30) Priority: 10.03.2021 EP 21161794; 10.03.2021 US 202163159076 P
(43) Date of publication of application: 24.01.2024
(73) Proprietor: Dolby International AB, Dublin, D02 VK60 (IE)
(72) Inventor: LASSURE, Gael, 90429 Nuremberg (DE); STAHLMANN, Alexander, 90429 Nuremberg (DE); MUELLER, Jan, 90429 Nuremberg (DE)
(74) Representative: Dolby International AB Patent Group Europe
(86) International application number: PCT/EP2022/055717
(87) International publication number: WO 2022/189341

(56) References cited:
- US-A1- 2014 140 537
- US-A1- 2015 036 838
- US-A1- 2016 182 923
- US-A1- 2016 293 172
- US-A1- 2020 128 303
- US-B2- 10 354 670
- JOE WINOGRAD VERANCE CORP: "TM-TA0005 technical requirement on SOME approach.docx", no. 2, 27 February 2020 (2020-02-27), XP017858396, Retrieved from the Internet <URL:https://member.dvb.org/wg/TM-TA/documentRevision/download/43456 TM-TA0005r2 TM-TA technical requirement on SOME.docx> [retrieved on 20200227]
- JOE WINOGRAD VERANCE CORP: "TM-GBS1029r20_Targeted Advertising Signalling Specification.docx", no. 20, 14 January 2021 (2021-01-14), XP017860162, Retrieved from the Internet <URL:https://member.dvb.org/wg/TM-MPEG2TS/documentRevision/download/45267 TM-GBS1029r20_Targeted Advertising Signalling Specification.docx> [retrieved on 20210114]

## Description

### TECHNICAL FIELD

The disclosure relates to the field of audio processing. In particular, the disclosure relates to techniques for audio processing in HbbTV terminal devices, including techniques for leveling main and supplementary audio tracks from a HbbTV service.

### BACKGROUND

HbbTV (Hybrid Broadcast Broadband TV) is an industry standard (ETSI TS 102 796, e.g., version V1.5.1 or any previous or subsequent versions) that provides a technology platform for seamlessly combining TV services delivered via broadcast with services delivered via broadband (or any suitable **IP** connection in general).

HbbTV services may be used to send different versions of an audio track or supplementary audio tracks that could be mixed with the main audio track (see for example US 2020/128303 A1). When the broadcast TV feed is first processed by a basic Set Top Box (STB) connected to an HbbTV enabled TV (as an example of a HbbTV terminal device), HbbTV hyperlinks may be added to the main A/V content so that the HbbTV enabled TV can process the hyperlinks and offer to the viewer the associated supplementary content/services.

When the supplementary service consist in delivery of a supplementary audio track to be mixed over the main audio track (e.g., as an audio commentary) or to temporarily replace the main audio track (e.g., as part of a targeted advertising segment), it is important that the mix is made on "consistent" audio level. However, the source STB may perform independent volume control on the main decoded track so that the HbbTV enabled TV may be unaware of the audio leveling performed by the STB. Thus, depending on the audio leveling performed by the STB, audio mixing of main and supplementary tracks by the HbbTV enabled TV may not be at a consistent audio level, thereby adversely impacting (end) user experience.

Thus, there is a need for improved methods of audio processing in HbbTV terminal devices that avoid level mismatch between main and supplementary audio tracks.

Document US 2015/036838 A1 discloses leveling of different audio sources (with different audio codecs) by measuring the audio level difference between audio reference signals with the respective audio codecs.

Document Joe Winograd Verance Corp: "TM-TA0005 technical requirement on SOME approach.docx", 27 February 2020, proposes that a Targeted Advertisement (TA) should not have a higher volume than the present broadcast content.

Document US 2014/140537 A1 discloses an audio loudness control system including a loudness adjuster module configured to adjust a level of an audio signal based on parameters associated with the audio signal. The parameters may include identification of a source of the audio signal. The parameters associated with the audio signal may be provided to the loudness adjuster in a message associated with the audio signal. The audio loudness control system may also include a database in communication with the loudness adjuster module. The loudness adjuster module may be configured to extract loudness related settings or parameters from the database that are associated with a source of the audio signal.

### SUMMARY

In view of the above, the present disclosure provides a method of audio processing in a HbbTV terminal device, as well as a corresponding apparatus (e.g., HbbTV terminal device), computer program, and computer-readable storage medium, having the features of the respective independent claims.

According to an aspect of the disclosure, a method of audio processing in a HbbTV terminal device is provided. The HbbTV terminal device may be a hybrid device in the sense of the HbbTV standard. That is, the HbbTV terminal device may conform to the HbbTV standard (ETSI TS 102 796 in any of its versions, e.g., any of versions 1.1.1 to 1.5.1, and any upcoming versions). The method may include receiving a decoded broadcast feed. The decoded broadcast feed may be generated by a decoder device and/or may be received from the decoder device, such as a set top box (STB), for example. The decoder device may be coupled to the HbbTV terminal device via a digital interface, such as HDMI, for example. The decoded broadcast feed may include a first audio track. The first audio track may be a main audio track of the broadcast. The method may further include receiving HbbTV content relating to the broadcast feed. The HbbTV content may be received (e.g., via broadband or any other suitable IP (internet) connection) from an HbbTV server (IP server), for example. The HbbTV content may include a second audio track. The second audio track may be a supplementary audio track that may be used to augment the main audio track or it may be used to temporarily replace the main audio track. The method may further include extracting level-related information from the decoded broadcast feed. The level-related information may be embedded in the decoded broadcast feed. It may enable to obtain an indication of an original audio level (reference audio level) of the first audio track. The method may further include obtaining the indication of the original audio level, for example by deriving the indication from the level-related information or by referring to an external source of information (e.g., IP server) for retrieving the indication using address information (reference information) included in the level-related information. The indication of the original audio level may be provided by the broadcaster or content creator/editor, for example. The method may further include analyzing the first audio track for determining an actual audio level of the first audio track. The method may further include determining a gain factor (e.g., attenuation or enhancement factor) based on the actual audio level and the original audio level. The gain factor may give an indication of an amount of attenuation or enhancement that has been applied to the first audio track by the decoder device. The method may yet further include generating a third audio track for output by the HbbTV terminal device based on the first audio track, the second audio track, and the gain factor. The third audio track may ensure a consistent audio level of its contributions from the first and second audio tracks.

Configured as described above, the proposed method can avoid audio level mismatch between the main audio track and any supplementary audio track, regardless of upstream volume control performed by the decoder device. If the decoder device has performed volume control on the main audio track prior to outputting it to the HbbTV terminal device, the HbbTV terminal device can appropriately adjust the audio level of the supplementary audio track to achieve a consistent listening experience. For example, if the decoder device has increased the volume of the main audio track, the audio level of the supplementary audio track can be enhanced as well, so that the supplementary audio track remains audible over the main audio track, or so that there is no drop in audio volume if the main audio track is temporarily replaced by the supplementary audio track. Likewise, if the decoder device has decreased the volume of the main audio track, the audio level of the supplementary audio track can be decreased as well, so that the supplementary audio track does not drown the main audio track, or so that there is no sudden increase in audio volume if the main audio track is temporarily replaced by the supplementary audio track. Notably, this leveling capability between the main audio track and the supplementary audio track is independent of the type of the decoder device, i.e., can be performed in a decoder-agnostic manner, without giving rise to legacy issues.

In some embodiments, extracting the level-related information from the decoded broadcast feed may involve identifying a digital watermark in the decoded broadcast feed. The digital watermark may be included in (e.g., embedded in, or imprinted on) the first audio track, for example. Alternatively, it may be included in a video component of the decoded broadcast feed for example, noting that the audio and video components of the broadcast feed are synchronized. Said extracting may further involve analyzing the digital watermark for deriving the level-related information.

Conveying the level-related information by means of digital watermarks ensures that the required information is received by the HbbTV terminal device, without requiring a dedicated data exchange or any assistance in general from the decoder device.

In some embodiments, the level-related information may be indicative of the original audio level of the first audio track. Alternatively, the HbbTV content may be received from an HbbTV server, and the level-related information may include reference information (e.g., address information) for obtaining the indication of the original audio level of the first audio track from the HbbTV server. Therein, the HbbTV server may be understood to be any internet-connected server (IP server) that provides HbbTV content to the HbbTV terminal device. The reference information may relate to an address link pointing to a data resource on the HbbTV server, for example.

Thereby, the information required for audio leveling of the main and supplementary audio tracks by the HbbTV terminal device can be transmitted over different channels, depending on specific requirements of the HbbTV use case at hand.

In some embodiments, analyzing the first audio track may involve analyzing audio samples of the first audio track.

In some embodiments, analyzing the first audio track may involve applying a level metering algorithm to the first audio track. It is understood that the level metering algorithm may be a standardized level metering algorithm. In particular, the same level metering algorithm may be used for determining the original audio level (at the broadcaster or content creator/editor side) and for determining the actual audio level at the HbbTV terminal side.

In some embodiments, determining the gain factor may involve comparing the original audio level and the actual audio level to derive the gain factor. For example, the gain factor may be based on a ratio of the original and actual audio levels, or a difference therebetween.

In some embodiments, generating the third audio track may involve adjusting the audio level of the second audio track based on the gain factor. Said generating may further involve mixing the first audio track and the level adjusted second audio track, or temporarily replacing the first audio track by the level adjusted second audio track. For instance, if the decoder device has lowered the audio level of the first audio track before outputting it to the HbbTV terminal device, the audio level of the second audio track may also be lowered before mixing. On the other hand, if the decoder device has raised the audio level of the first audio track before outputting it to the HbbTV terminal device, the audio level of the second audio track may also be raised before mixing.

In some embodiments, extracting the level-related information and analyzing the first audio track may be performed for each of a plurality of consecutive time portions. These time portions (or time windows) may be relatively short. For instance, the time portions may be shorter than 2s (seconds), such as about 1s, for example.

Accordingly, audio leveling by the HbbTV terminal device can appropriately react to any volume control operations of the decoder device in real time.

In some embodiments, if the level-related information is extracted from the decoded broadcast feed in a given time portion, the first audio track may be analyzed in the same given time portion.

In some embodiments, the method may further include synchronizing the first and second audio tracks based on respective time stamps imprinted on the broadcast feed (e.g., its audio and/or video component) and the second audio track. This may involve, for example, buffering and/or delaying one of the first and second audio tracks. The time stamps may be embedded as digital watermarks, for example. Synchronization may be understood to be performed before mixing. The time stamps may occur more frequently than, for example, once per 2s.

In some embodiments, the method may further include decoding the HbbTV content at the HbbTV terminal device. This may be achieved by an appropriately set up decoder or decoder unit of the HbbTV terminal device.

In some embodiments, the decoded broadcast feed may be received from a decoder device coupled to the HbbTV terminal device. Therein, the decoder device may be able to adjust the audio level of the first audio track. That is, the decoder device may be able to perform volume control for the broadcast feed, e.g., for the first audio track, so that the audio level of the first audio track at the input to the HbbTV terminal device may be variable, depending on a volume setting of the decoder device. Said volume control may be performed in response to a (end) user input, for example.

According to another aspect of the disclosure, a HbbTV terminal device is provided. The HbbTV terminal device may include a first interface for receiving a decoded broadcast feed. The decoded broadcast feed may include a first audio track. The HbbTV terminal device may further include a second interface for receiving HbbTV content relating to the broadcast feed. The HbbTV content may include a second audio track. The HbbTV terminal device may further include an extracting unit for extracting level-related information from the decoded broadcast feed. The level-related information may be embedded in the decoded broadcast feed and may enable to obtain an indication of an original audio level (reference audio level) of the first audio track. The extracting unit may be further adapted to obtain (e.g., determine, derive, or retrieve) the indication of the original audio level. The HbbTV terminal device may further include an analyzing unit (e.g., level metering unit) for analyzing the first audio for determining an actual audio level of the first audio track. The HbbTV terminal device may further include a determination unit (e.g., gain determination unit) for determining a gain factor based on the actual audio level and the original audio level. The HbbTV terminal device may yet further include a generating unit (e.g., mixing unit) for generating a third audio track for output by the HbbTV terminal device based on the first audio track, the second audio track, and the gain factor. Any of the aforementioned units or interfaces may by computer-implemented, e.g., may be implemented by one or more processors (computer processors) of the HbbTV terminal device. The apparatus may further include components of a regular TV device, such as speakers and a display, for example.

According to another aspect, a computer program is provided. The computer program may include instructions that, when executed by a processor, cause the processor to carry out all steps of the methods described throughout the disclosure.

According to another aspect, a computer-readable storage medium is provided. The computer-readable storage medium may store the aforementioned computer program.

According to yet another aspect an apparatus including a processor and a memory coupled to the processor is provided. The processor may be adapted to carry out all steps of the methods described throughout the disclosure. The apparatus may further include interfaces as described above, and/or components of a regular TV device, such as speakers and a display, for example.

It will be appreciated that apparatus features and method steps may be interchanged in many ways. In particular, the details of the disclosed method(s) can be realized by the corresponding apparatus, and vice versa, as the skilled person will appreciate. Moreover, any of the above statements made with respect to the method(s) (and, e.g., their steps) are understood to likewise apply to the corresponding apparatus (and, e.g., their blocks, stages, units, etc.), and vice versa.

### BRIEF DESCRIPTION OF DRAWINGS

Example embodiments of the disclosure are explained below with reference to the accompanying drawings, wherein
**Fig. 1** schematically illustrates an example of an HbbTV framework including a broadcast service, an IP server, a decoder device, and an HbbTV terminal device,
**Fig. 2** schematically illustrates example operations of the decoder device,
**Fig. 3A** and **Fig. 3B** schematically illustrates schematically illustrate example operations of the HbbTV terminal device according to embodiments of the disclosure,
**Fig. 4** is a flowchart schematically illustrating an example of a method of audio processing in the HbbTV terminal device according to embodiments of the disclosure, and
**Fig. 5** schematically illustrates an example of a HbbTV terminal device according to embodiments of the disclosure.

### DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

In the context of the present disclosure, an HbbTV terminal device (e.g., HbbTV enabled TV) is understood to mean a device that is capable of receiving, in parallel, a (regular) broadcast feed (e.g., either "raw" or decoded) including A/V content and additional content (e.g., A/V content) relating to the broadcast feed via an IP connection (e.g., broadband internet connection) from an IP server (e.g., HbbTV server). Therein, it is understood that in some cases, the broadcast feed may be received via a digital interface. As such, the HbbTV terminal device is understood to correspond to a "hybrid terminal" as defined by the HbbTV standard, i.e., a terminal supporting delivery of A/V content both via broadband (or any suitable IP connection in general) and via broadcast. Therein, broadband is understood to mean an always-on bi-directional IP connection with sufficient bandwidth for streaming or downloading A/V content, and broadcast is understood to mean, for example, a classical uni-directional MPEG-2 transport stream based broadcast such as DVB-T, DVB-S or DVB-C. The broadcast feed may relate both to linear and non-linear A/V content. Linear A/V content is understood to mean broadcast A/V content intended to be viewed in real time by the user, whereas non-linear A/V content is understood to mean A/V content that which does not have to be consumed linearly from beginning to end for example, A/V content streaming on demand.

HbbTV services may be used to send different versions of the audio track or supplementary audio tracks that could be mixed or alternated with the main audio track. When the broadcast TV feed is first processed by a basic STB connected to an HBBTV enabled TV (as an example of an HbbTV terminal device), broadcasters may "watermark" the HbbTV hyperlink into the main A/V content (e.g., the main audio track) so that the HbbTV enabled TV can process the hyperlink and offer the associated supplementary content/services to the viewer.

When the supplementary service consist in or involves delivery of a supplementary audio track to be mixed over the main audio track or to be alternated with the main audio track, it is important that the mix be made on "consistent" audio level. The problem is that the source STB will perform some degree of volume control on the main decoded track and that the HbbTV enabled TV has no information on the audio leveling performed by the STB.

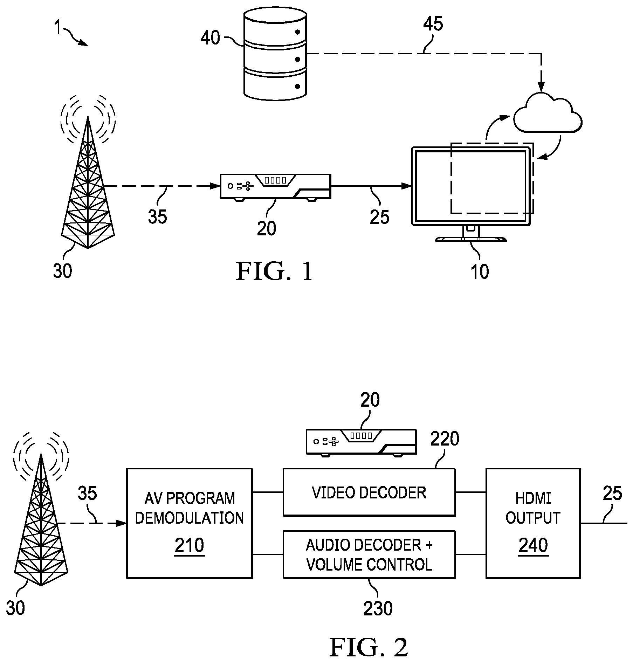

This issue is further illustrated with reference to **Fig. 1****,** which schematically illustrates an example of an HbbTV framework 1 including a broadcast service (e.g., a main broadcast service with an HbbTV link) 30, an IP server (e.g., HbbTV IP server) 40, a decoder device (e.g., STB) 20, and an HbbTV terminal device (e.g., HbbTV enabled TV) 10. The decoder device 20 receives a broadcast feed (e.g., main A/V broadcast feed) 35 from the broadcast service 30. It decodes the broadcast feed and provides a decoded broadcast feed 25 to the HbbTV terminal device 10. The decoded broadcast feed 25 can be provided to the HbbTV terminal device 10 via a digital connection, such as an HDMI link. It may carry the main A/V content, e.g., a main audio track and a main video track. The broadcast feed 35, as well as the decoded broadcast feed 25, include watermarked links to the HbbTV service, i.e., links that are embedded into the A/V content (e.g., main audio track or main video track) of the broadcast feed via digital watermarking. Using these links, the HbbTV terminal device 10 can obtain (e.g., fetch, retrieve) supplementary services, including supplementary A/V content (e.g., one or more a supplementary audio tracks and/or one or more supplementary video tracks) over an IP connection from the IP server 40, and decode the supplementary A/V content. As far as audio is concerned, the HbbTV terminal device 10 mixes the supplementary audio track(s) with the main audio track or temporarily replaces the main audio track by the supplementary audio track(s), where it is understood that temporarily replacing tracks (or alternating tracks) is a limit case of mixing these tracks with each other.

Before output to the HbbTV terminal device 10, the decoder device 20 can perform audio level control on the audio component of the decoded broadcast feed (i.e., on the main audio track). The HbbTV terminal device 10 will be unaware of any audio level control (volume control) by the decoder device 20, which may result in inappropriate mixing of the main audio track and the supplementary audio track(s). For instance, the audio level of the main audio track may have been enhanced by the decoder device 20, in which case the supplementary audio track(s) may not be audible over the main audio track, or alternating between the main audio track and the supplementary audio track(s) may result in discernible audio level drops when transitioning from the main audio track to the supplementary audio track(s). Likewise, the audio level of the main audio track may have been reduced by the decoder device 20, in which case the main audio track may not be audible anymore in the presence of the supplementary audio track(s), or alternating between the main audio track and the supplementary audio track(s) may result in discernible audio level boosts when transitioning from the main audio track to the supplementary audio track(s).

An example operation of the decoder device 20 is illustrated in more detail in **Fig. 2****.** As described above, the decoder device 20 receives the broadcast feed 35 from the broadcast service 30. The A/V program is demodulated in A/V demodulation block 210. A video decoder block 220 decodes the video component (e.g., video content, main video track) and an audio decoder block 230 decodes the audio component (e.g., audio content, main audio track). An HDMI output block 240 generates the decoded broadcast feed 25 including the decoded video component and the decoded audio component for output to the HbbTV terminal device 10.

Broadly speaking, the present disclosure proposes to address the aforementioned issue of audio level mismatch between the main audio track and the supplementary audio track(s) as follows. The HbbTV terminal device (e.g., HbbTV enabled TV) receiving the main audio decoded and leveled by the decoder device (e.g., source STB) should "measure" the level (audio level) of the received audio using a "standardized" level metering algorithm and compare it against reference level metadata embedded in the feed processed by the HbbTV terminal device either in the supplementary audio track or "watermarked" in the main track.

Based on the level difference, the HbbTV terminal device then can level the supplementary audio track before mixing. Doing so can guarantee a consistent listening experience of the main and supplementary audio services to the viewer/listener.

In other words, the present disclosure proposes to embed the live reference level (reference audio level, original audio level) of the main audio service (i.e., the main track) into the main audio service using (digital) watermarking or delivered as metadata through the supplementary audio services so that the HbbTV terminal device can decode and level a supplementary audio service with respect to the leveling performed by a STB processing the main broadcast audio service.

Therein, the reference level of the main audio track is measured at content creation, preferably over short time windows. Such measurement may be performed for speech or in level gated manner, as described in ITU-R BS.1770, for example. The measured reference audio level is transported to the HbbTV terminal device either watermarked within the main audio track or the video stream of the broadcast feed, or it may be attached as metadata of the supplementary audio track (supplementary audio track frames). In this case, it is understood that the broadcast feed includes reference information that allows to retrieve the metadata from the HbbTV server(s). At the HbbTV terminal device side, the audio level is measured for the same short time windows, using the same algorithm, and compared to the transported reference audio level. If the reference audio level is attached to supplementary audio, the short time windows are synchronized between the HbbTV content and the A/V content of the broadcast feed (i.e., between TV and digital (e.g., HDMI) capture), using timecodes watermarked in the digital (e.g., HDMI) feed received from the decoder device.

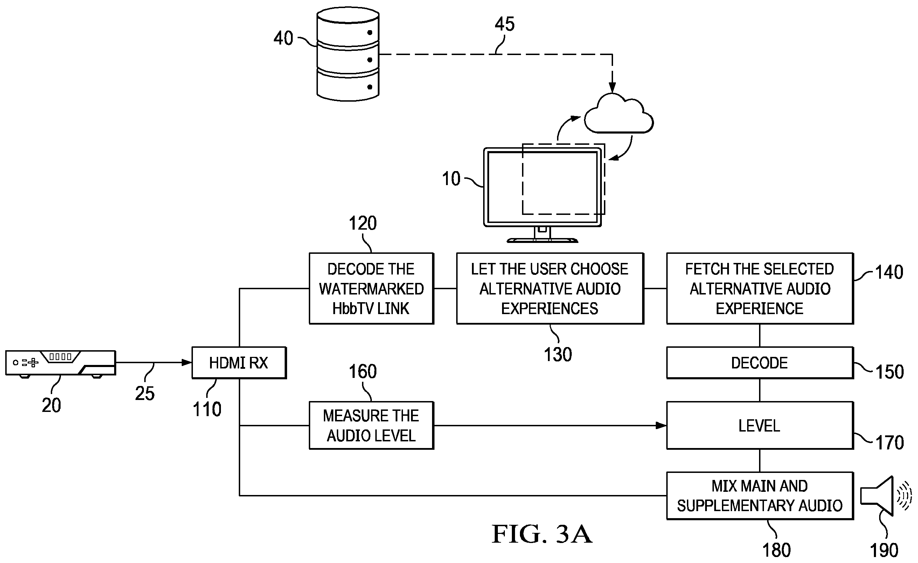

An example operation of the HbbTV terminal device 10 is illustrated in more detail in **Fig. 3A****.** HDMI Rx block 110 receives the decoded broadcast feed 25 from the decoder device 20. The decoded broadcast feed typically includes an audio component and a video component. The audio component may comprise or correspond to a first audio track (main audio track). A watermarked HbbTV link in the broadcast feed is decoded by processing block 120. Having access to the HbbTV link allows to present the user with a choice of, for example, alternative audio experiences by processing block 130. This may include but is not limited to different language audio tracks or audio commentaries, for example. HbbTV content 45 corresponding to the selected alternative audio experience is fetched from the HbbTV server 40 by processing block 140 and decoded by decoding block 150. It is assumed that the HbbTV content 45 includes a second audio track (supplementary audio track). In addition, an indication of the reference audio level of the first audio track is either derived from (level-related) information embedded in the A/V content of the broadcast feed, or retrieved from the HbbTV server 40, using the level-related information as a pointer.

Concurrently, the audio level of the first audio track is measured by measuring block 160. The measured audio level can then be used, by leveling block 170, for leveling the second audio track such that it has an audio level consistent with the audio level of the first audio track. This may involve applying a gain factor that is determined based on the reference audio level of the first audio track and the measured (i.e., actual) audio level of the first audio track. The leveled second audio track (level adjusted second audio track) is then mixed with the first audio track by mixing block 180. A mixed audio track (third audio track) generated by the mixing block 180 may be output by speaker 190.

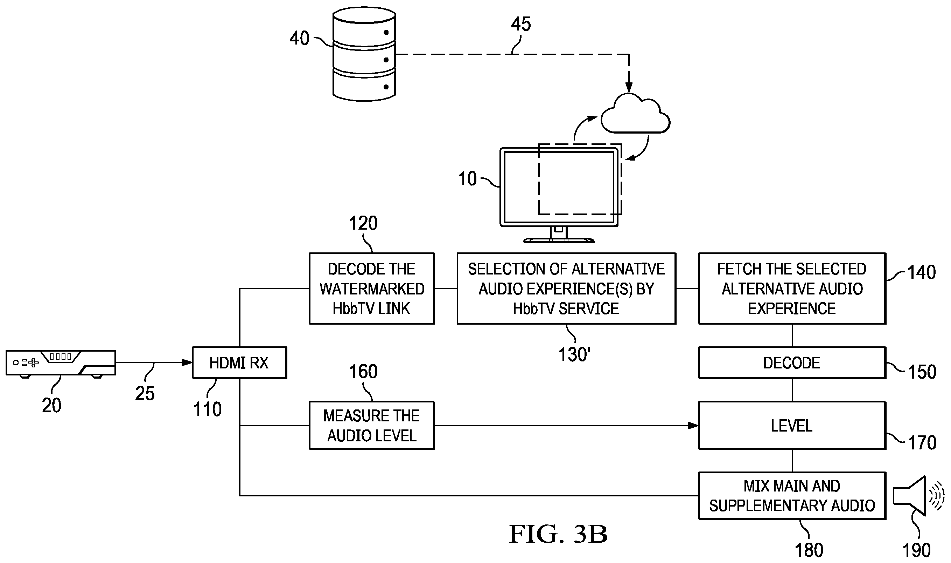

Another example operation of the HbbTV terminal device 10 is illustrated in **Fig. 3B**. Operation of the HbbTV terminal device 10 is identical to that illustrated in **Fig. 3A****,** with the exception that processing block 130 is replaced by processing block 130', at which the HbbTV service (e.g., HbbTV system, HbbTV server) instead of the user selects the alternative audio experience. This may be the case for example for a targeted advertising segment. In such scenario, the HbbTV link may indicate the presence of an advertising segment in the broadcast feed. The HbbTV service can then automatically (i.e., without user intervention) select HbbTV content (e.g., including alternative audio and/or video content) relating to an alternative advertising segment to supersede or replace the advertising segment included in the broadcast feed, for example based on previously gathered user data. The HbbTV content 45 that is fetched from the HbbTV server 40 by processing block 140 and decoded by decoding block 150 in this scenario corresponds to the alternative advertising segment.

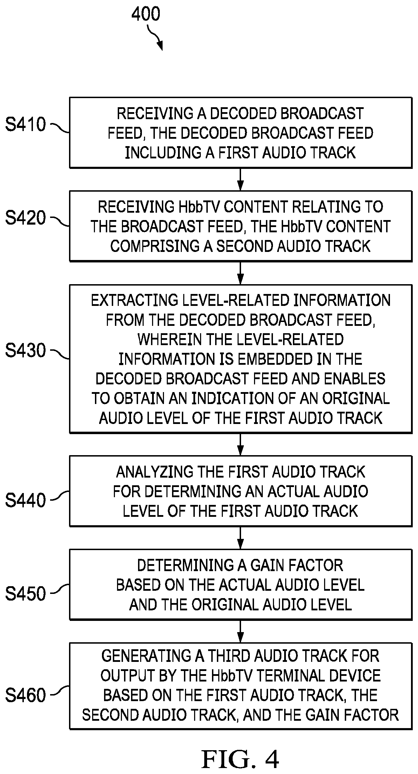

An example of a corresponding method 400 of audio processing in a HbbTV terminal device (e.g., conforming to the HbbTV standard ETSI TS 102 796 in any of its versions, e.g., any of versions 1.1.1 to 1.5.1, and any upcoming versions) is schematically illustrated in the flowchart of **Fig. 4****.** The method 400 may be performed by the HbbTV terminal device and is understood to cover both use cases of **Fig. 3A** and **Fig. 3B****.** It comprises steps S410 through S460.

At step S410, a decoded broadcast feed is received. The decoded broadcast feed includes a first audio track (e.g., the main audio track). This decoded broadcast feed may have been generated by (and received from) a decoder device, such as a STB, for example. It is understood that the decoder device may be coupled to the HbbTV terminal device via a digital interface, such as HDMI, for example, or any other suitable interface. As noted above, such decoder device is typically able to perform volume control and to adjust the audio level of the first audio track. For instance, a user may induce changes of audio level of the first audio track by volume control via the decoder device, instead of by means of volume control via the HbbTV terminal device. Accordingly, the audio level of the first audio track at the input to the HbbTV terminal device can be variable, depending a volume setting of the decoder device. Step S410 may correspond to operation of the aforementioned HDMI Rx block 110, for example.

At step S420, HbbTV content relating to the broadcast feed is received. The HbbTV content comprises a second audio track (e.g., supplementary audio track). This HbbTV content may be received (e.g., via broadband or any suitable IP connection) from an HbbTV server (IP server), for example. For instance, HbbTV content may be requested and retrieved from the HbbTV server using a hyperlink or any other reference that is embedded in the (main) A/V content of the broadcast feed. Such hyperlinks or references may be watermarked into the audio and/or video content at regular time intervals. This step may also include decoding the HbbTV content from whatever format in which it is received or retrieved from the HbbTV server. This may be done by an appropriately set up decoder or decoding unit of the HbbTV terminal device.

As noted above, the second (or supplementary) audio track may be used for mixing with the main audio track (e.g., in the case of an audio commentary) or for temporarily replacing or alternating with the first audio track (e.g., in the case of a targeted advertisement segment).

Step S420 may correspond to operation of aforementioned blocks 120, 130 (or 130'), 140, and 150, for example.

At step S430, level-related information is extracted from the decoded broadcast feed. Therein, the level-related information is embedded in the decoded broadcast feed (e.g., in the audio content and/or the video content). Said extracting may involve identifying a digital watermark in the decoded broadcast feed (e.g., in the first audio track or in the video content of the decoded broadcast feed), and analyzing the digital watermark for deriving the level-related information. The digital watermark may be embedded in or imprinted on the respective component of the decoded broadcast feed. Notably, both the audio component and the video component of the broadcast feed may be used for carrying the watermark, since both components are tightly synchronized with each other.

The level-related information extracted from the decoded broadcast feed enables to obtain an indication of an original audio level (or reference audio level) of the first audio track. Two possible modes of obtaining said indication will now be described in more detail.

According to a first mode, the indication of the original audio level may be derived from the level-related information. That is, the level-related information may include said indication, or in other words, the level-related information itself may be indicative of the original audio level of the first audio track. The indication of the original audio level may be time stamped, in the sense that the level-related information (e.g., the digital watermark) may include both the aforementioned indication and a timestamp.

According to a second mode, the HbbTV terminal device may refer to an external source of information (e.g., the HbbTV server or IP server) for retrieving the indication. In this case, the level-related information comprises reference information (e.g., an address link, hyperlink, or other pointer to a data resource) for obtaining (e.g., requesting, accessing, retrieving) the indication of the original audio level of the first audio track from the external source of information. Similarly to the first mode, also for the second mode the indication of the original audio level retrieved from the external source of information may be timestamped.

For both modes, it is understood that the indication of the original audio level is initially provided by the broadcaster or content creator/editor (along with the time stamps, if applicable).

At step S440, the first audio track is analyzed for determining an actual audio level of the first audio track. Specifically, the analysis may pertain to the samples of the first audio track. One way to perform the analysis is to apply a level metering algorithm to the (samples of the) first audio track. Preferably, this level metering algorithm is a standardized level metering algorithm, at least in the sense that the same level metering algorithm has been used for determining the original audio level (at the broadcaster or content creator/editor side) that can be obtained or derived using the level-related information embedded in the broadcast feed. Thereby, it can be ensured that the original audio level (reference audio level) and the actual audio level are directly comparable to each other without conversion.

It is understood that the extracting of the level-related information at step S430 and the analyzing the first audio track at step S440 can be performed for each of a plurality of consecutive time portions or time windows. Then, if the level-related information is extracted from the decoded broadcast feed in a given time portion, the first audio track should be analyzed in the same given time portion, for deriving the gain factor (see step S450). The time portions in suit may be relatively short and may have a duration that is shorter than what is denoted in the field by "short term," which typically indicates durations of 2 to 8 seconds. For instance, a suitable length of the time portions may be 1 second.

Step S440 may correspond to operation of the aforementioned measuring block 160, for example.

At step S450, a gain factor is determined based on the actual audio level and the original audio level. This gain factor may be an attenuation or enhancement factor and may give an indication of an amount of attenuation or enhancement that has been applied to the first audio track by the decoder device. The gain factor can be derived by comparing the original audio level and the actual audio level. As such, it may be based, for example, on a ratio or difference between the original audio level and the actual audio level. If the first audio track (e.g., main audio track) is found by the comparison to have been attenuated by the decoder device, also the second audio track (e.g., supplementary audio track) should be attenuated before replacing or mixing with the first audio track, preferably by the same amount. Likewise, if it is found that the first audio track has been enhanced by the decoder device, also the second audio track should be enhanced, preferably by the same amount.

At step S460, a third audio track is generated based on the first audio track, the second audio track, and the gain factor, for output by the HbbTV terminal device. Here, generating the third audio track may involve adjusting the audio level of the second audio track based on the gain factor (i.e., mimicking the audio level adjustment that has been found to have been performed by the decoder device). For instance, if it is found at step S450 that the decoder device has lowered the audio level of the first audio track before outputting it to the HbbTV terminal device, the audio level of the second audio track may also be lowered before generating the third audio track (e.g., by the same amount or a substantially similar amount). On the other hand, if it is found at step S450 that the decoder device has raised the audio level of the first audio track before outputting it to the HbbTV terminal device, the audio level of the second audio track may also be raised before generating the third audio track (e.g., by the same amount or a substantially similar amount). After level adjusting the second audio track, the first audio track and the level adjusted second audio track may be mixed, or the level adjusted second audio track may be used for temporarily replacing the first audio track. As noted above, this may be done for each of a plurality of subsequent time portions, so that any impact of volume control by the decoder device can be appropriately handled.

Adjusting the second audio track at step S460 may correspond to operation of aforementioned leveling block 170, for example. Further, mixing the level adjusted second audio track with the first audio track or temporarily replacing the first audio track by the level adjusted second audio track may correspond to operation of the aforementioned mixing block 180, for example.

As noted above, the audio and video components of the broadcast feed (e.g., the main audio and video tracks) may be tightly synchronized by means of watermarked (i.e., embedded, or imprinted) timestamps. Moreover, also the first and second audio tracks may be synchronized by means of watermarked timestamps. Accordingly, the method 400 may further include (e.g., at any point before mixing at step S460) synchronizing the first and second audio tracks based on time respective stamps imprinted on (a suitable component of) the broadcast feed and the second audio track. This synchronization may involve, for example, buffering and/or delaying one of the first and second audio tracks.

It is to be noted that the audio level comparison does not necessarily have to be instantaneous. This means that a gain factor can be determined based on the actual audio level and the original audio level for a given time portion, but may be used for mixing the first audio track and the level adjusted second audio track, or temporarily replacing the first audio track by the level adjusted second audio track at a later time portion. The shorter the delay the better, but in practice the volume level (audio level) applied on the source STB may be considered as quasi-static, in the sense that it only moves when the end user instructs the STB to perform volume control (e.g., using its remote control), or to mute audio. In this sense, a history of determined gain factors can be resorted to when performing the actual mixing.

In other words, a central aspect of the present disclosure is a comparison between measured loudness at the HbbTV terminal device input and original loudness of the same content segment as it entered the STB. As long as the end user is not changing the volume control at the STB, this difference is constant. So when the HbbTV supplementary stream starts to play (e.g., upon selection by the user, or when entering an advertising segment), there is already a history of measured differences (i.e., gain factors) of the past, and the task is more to catch up for a change when the user operates the volume control of the STB. Without intended limitation, this can be derived for example as a sliding average over a predefined number of past measurement/original loudness comparisons (i.e., sliding average over a predefined number of past gain factors), or the most recently calculated gain factor can be used. In other words, the current gain factor for adjusting the audio level of the second audio track may be determined by calculating a sliding average over a predefined number of previous gain factors, wherein the previous gain factors are determined by comparing the original audio level and the actual audio level of respective previous time portions of the first audio track. In general, the mixing of the first and second audio tracks may be based on a gain factor calculated for the present time portion, or it may be based on one or more gain factors determined for preceding time portions (e.g., immediately preceding time portions).

### Example Computing Device

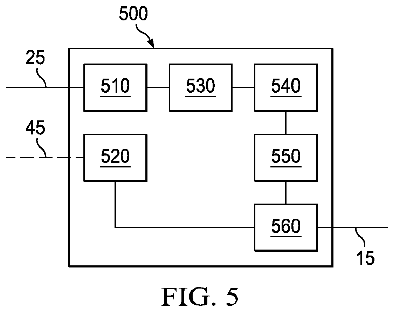

A method of audio processing in a HbbTV terminal device has been described above. Additionally, the present disclosure also relates to an apparatus (e.g., HbbTV terminal device or audio processing module of a HbbTV terminal device) for carrying out this method. An example of such apparatus is shown in **Fig. 5****.** In line with the method 400 illustrated in **Fig. 4****,** the apparatus (e.g., HbbTV terminal device) 500 may comprise a first interface 510, a second interface 520, an extracting unit 530, an analyzing unit (level metering unit) 540, a determination unit (gain factor determination/calculation unit) 550, and a generating unit (mixing unit) 560. The first interface 510 may be configured for receiving the decoded broadcast feed 25, as described above. The second interface 520 may be configured for receiving HbbTV content 45 relating to the broadcast feed, as described above. The extracting unit 520 may be configured for extracting level-related information from the decoded broadcast feed 25, as described above. The extracting unit may be further adapted to obtain (e.g., determine, derive, or retrieve) the indication of the original audio level, as described above. The an analyzing unit 540 may be configured for analyzing the first audio track for determining an actual audio level of the first audio track, as described above. The determination unit 550 may be configured for determining a gain factor based on the actual audio level and the original audio level, as described above. Finally, the generating unit 560 may be configured for generating a third audio track 15 for output by the HbbTV terminal device 500 based on the first audio track, the second audio track, and the gain factor, as described above. Any of the aforementioned units or interfaces may by computer-implemented, e.g., may be implemented by one or more processors (computer processors) of the HbbTV terminal device. The apparatus may further include components of a regular TV device, such as speakers and a display, for example.

In general, the present disclosure relates to an apparatus comprising a processor and a memory coupled to the processor, wherein the processor is adapted to carry out the steps of the method(s) described herein. For example, the processor may be adapted to implement the aforementioned interfaces and/or units. The apparatus may further include interfaces as described above, and/or components of a regular TV device, such as speakers and a display, for example.

The present disclosure further relates to a program (e.g., computer program) comprising instructions that, when executed by a processor, cause the processor to carry out some or all of the steps of the methods described herein.

Yet further, the present disclosure relates to a computer-readable (or machine-readable) storage medium storing the aforementioned program. Here, the term "computer-readable storage medium" includes, but is not be limited to, data repositories in the form of solid-state memories, optical media, and magnetic media, for example.

### Interpretation and Additional Configuration Considerations

The present disclosure relates to methods of audio processing and apparatus (e.g., HbbTV terminal devices) for audio processing. It is understood that any statements made with regard to the methods and their steps likewise and analogously apply to the corresponding apparatus and their interfaces/blocks/units, and vice versa.

Unless specifically stated otherwise, as apparent from the following discussions, it is appreciated that throughout the disclosure discussions utilizing terms such as "processing," "computing," "calculating," "determining", analyzing" or the like, refer to the action and/or processes of a computer or computing system, or similar electronic computing devices, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" (e.g., a HbbTV terminal device) may include one or more processors.

The methodologies described herein are, in one example embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit, and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, a remote control, and so forth. The processing system may also encompass a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one or more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code. Furthermore, a computer-readable carrier medium may form, or be included in a computer program product.

**In** alternative example embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a HbbTV terminal device.

Note that the term "machine" shall also be taken to include any collection of machines that individually or jointly execute a set (or multiple sets) of instructions to perform any one or more of the methodologies discussed herein.

Thus, one example embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, example embodiments of the present disclosure may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present disclosure may take the form of a method, an entirely hardware example embodiment, an entirely software example embodiment or an example embodiment combining software and hardware aspects. Furthermore, the present disclosure may take the form of carrier medium (e.g., a computer program product on a computer-readable storage medium) carrying computer-readable program code embodied in the medium.

The software may further be transmitted or received over a network via a network interface device. While the carrier medium is in an example embodiment a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present disclosure. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media may also take the form of acoustic or light waves, such as those generated during radio wave and infrared data communications. For example, the term "carrier medium" shall accordingly be taken to include, but not be limited to, solid-state memories, a computer product embodied in optical and magnetic media; a medium bearing a propagated signal detectable by at least one processor or one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one example embodiment by an appropriate processor (or processors) of a processing (e.g., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

Reference throughout this disclosure to "one example embodiment", "some example embodiments" or "an example embodiment" means that a particular feature, structure or characteristic described in connection with the example embodiment is included in at least one example embodiment of the present disclosure. Thus, appearances of the phrases "in one example embodiment", "in some example embodiments" or "in an example embodiment" in various places throughout this disclosure are not necessarily all referring to the same example embodiment. Furthermore, the particular features, structures or characteristics may be combined in any suitable manner, as would be apparent to one of ordinary skill in the art from this disclosure, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the disclosure, various features of the disclosure are sometimes grouped together in a single example embodiment, Fig., or description thereof for the purpose of streamlining the disclosure and aiding in the understanding of one or more of the various inventive aspects. This method of disclosure, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this disclosure.

In the description provided herein, numerous specific details are set forth. However, it is understood that example embodiments of the disclosure may be practiced without these specific details. In other instances, well-known methods, structures and techniques have not been shown in detail in order not to obscure an understanding of this description.

## Claims

1. A method of audio processing in a HbbTV terminal device, the method comprising:
receiving (S410) a decoded broadcast feed, the decoded broadcast feed including a first audio track;
receiving (S420) HbbTV content relating to the broadcast feed, the HbbTV content comprising a second audio track;
extracting (S430) level-related information from the decoded broadcast feed, wherein the level-related information is embedded in the decoded broadcast feed and enables to obtain an indication of an original audio level of the first audio track;
analyzing (S440) the first audio track for determining an actual audio level of the first audio track;
determining (S450) a gain factor based on the actual audio level and the original audio level; and
generating (S460) a third audio track for output by the HbbTV terminal device based on the first audio track, the second audio track, and the gain factor.

2. The method according to claim 1, wherein extracting (S430) the level-related information from the decoded broadcast feed involves:
identifying a digital watermark in the decoded broadcast feed; and
analyzing the digital watermark for deriving the level-related information.

3. The method according to claim 1 or 2,
wherein the level-related information is indicative of the original audio level of the first audio track; or
wherein the HbbTV content is received from an HbbTV server, and the level-related information comprises reference information for obtaining the indication of the original audio level of the first audio track from the HbbTV server.

4. The method according to any one of claims 1 to 3, wherein analyzing (S440) the first audio track involves analyzing audio samples of the first audio track.

5. The method according to any one of claims 1 to 4, wherein analyzing (S440) the first audio track involves applying a level metering algorithm to the first audio track.

6. The method according to any one of claims 1 to 5, wherein determining (S450) the gain factor involves comparing the original audio level and the actual audio level to derive the gain factor.

7. The method according to any one of claims 1 to 6, wherein generating (S460) the third audio track involves:
adjusting the audio level of the second audio track based on the gain factor; and
mixing the first audio track and the level adjusted second audio track, or temporarily replacing the first audio track by the level adjusted second audio track.

8. The method according to any one of claims 1 to 7, wherein the extracting (S430) the level-related information and the analyzing the first audio track are performed for each of a plurality of consecutive time portions; and/or
wherein, if the level-related information is extracted from the decoded broadcast feed in a given time portion, the first audio track is analyzed in the same given time portion.

9. The method according to claim 8 when depending on claim 6, wherein the gain factor is determined in the given time portion and wherein the gain factor is used for mixing the first audio track and the level adjusted second audio track, or temporarily replacing the first audio track by the level adjusted second audio track at a later time portion.

10. The method of claim 1, wherein determining (S450) the gain factor involves determining a current gain factor by calculating a sliding average over a predefined number of previous gain factors, wherein the previous gain factors are determined by comparing the original audio level and the actual audio level of respective previous time portions of the first audio track.

11. The method according to any one of claims 1 to 10, further comprising synchronizing the first and second audio tracks based on time respective stamps imprinted on the broadcast feed and the second audio track.

12. An apparatus comprising a processor and a memory coupled to the processor, wherein the processor is adapted to carry out the steps of the method according to any one of claims 1 to 11.

13. A computer program comprising instructions that when executed by a computing device cause the computing device to carry out the steps of the method according to any one of claims 1 to 11.

14. A computer-readable storage medium storing the computer program according to claim 13.

## Patentansprüche

1. Verfahren zur Audioverarbeitung in einem HbbTV-Endgerät, wobei das Verfahren Folgendes umfasst:
Empfangen (S410) eines decodierten Rundfunk-Feeds, wobei der decodierte Rundfunk-Feed eine erste Audiospur beinhaltet;
Empfangen (S420) von HbbTV-Inhalt in Bezug auf den Rundfunk-Feed, wobei der HbbTV-Inhalt eine zweite Audiospur umfasst;
Extrahieren (S430) pegelbezogener Informationen aus dem decodierten Rundfunk-Feed, wobei die pegelbezogenen Informationen in dem decodierten Rundfunk-Feed eingebettet sind und es ermöglichen, eine Angabe eines ursprünglichen Audiopegels der ersten Audiospur zu erhalten;
Analysieren (S440) der ersten Audiospur zum Bestimmen eines tatsächlichen Audiopegels der ersten Audiospur;
Bestimmen (S450) eines Verstärkungsfaktors basierend auf dem tatsächlichen Audiopegel und dem ursprünglichen Audiopegel; und
Erzeugen (S460) einer dritten Audiospur zur Ausgabe durch das HbbTV-Endgerät, basierend auf der ersten Audiospur, der zweiten Audiospur und dem Verstärkungsfaktor.

2. Verfahren nach Anspruch 1, wobei Extrahieren (S430) der pegelbezogenen Informationen aus dem decodierten Rundfunk-Feed mit Folgendem einhergeht:
Identifizieren eines digitalen Wasserzeichens in dem decodierten Rundfunk-Feed; und
Analysieren des digitalen Wasserzeichens zum Ableiten der pegelbezogenen Informationen.

3. Verfahren nach Anspruch 1 oder 2,
wobei die pegelbezogenen Informationen den ursprünglichen Audiopegel der ersten Audiospur angeben; oder
wobei der HbbTV-Inhalt von einem HbbTV-Server empfangen wird und die pegelbezogenen Informationen Referenzinformationen zum Erhalten der Angabe des ursprünglichen Audiopegels der ersten Audiospur von dem HbbTV-Server umfassen.

4. Verfahren nach einem der Ansprüche 1 bis 3, wobei Analysieren (S440) der ersten Audiospur mit Analysieren von Audio-Samples der ersten Audiospur einhergeht.

5. Verfahren nach einem der Ansprüche 1 bis 4, wobei Analysieren (S440) der ersten Audiospur mit Anwenden eines Pegelmessalgorithmus auf die erste Audiospur einhergeht.

6. Verfahren nach einem der Ansprüche 1 bis 5, wobei Bestimmen (S450) des Verstärkungsfaktors mit Vergleichen des ursprünglichen Audiopegels und des tatsächlichen Audiopegels einhergeht, um den Verstärkungsfaktor abzuleiten.

7. Verfahren nach einem der Ansprüche 1 bis 6, wobei Erzeugen (S460) der dritten Audiospur mit Folgendem einhergeht:
Anpassen des Audiopegels der zweiten Audiospur basierend auf dem Verstärkungsfaktor; und
Mischen der ersten Audiospur und pegelangepassten zweiten Audiospur, oder vorübergehendes Ersetzen der ersten Audiospur durch die pegelangepasste zweite Audiospur.

8. Verfahren nach einem der Ansprüche 1 bis 7, wobei das Extrahieren (S430) der Pegelinformationen und das Analysieren der ersten Audiospur für jeden einer Vielzahl aufeinanderfolgender Zeitabschnitte durchgeführt werden; und/oder
wobei, wenn die pegelbezogenen Informationen aus dem decodierten Rundfunk-Feed in einem bestimmten Zeitabschnitt extrahiert werden, die erste Audiospur in demselben Zeitabschnitt analysiert wird.

9. Verfahren nach Anspruch 8, wenn abhängig von Anspruch 6, wobei der Verstärkungsfaktor in dem gegebenen Zeitabschnitt bestimmt wird, und wobei der Verstärkungsfaktor zum Mischen der ersten Audiospur und der pegelangepassten zweiten Audiospur oder zum vorübergehenden Ersetzen der ersten Audiospur durch die pegelangepasste zweite Audiospur zu einem späteren Zeitpunkt verwendet wird.

10. Verfahren nach Anspruch 1, wobei Bestimmen (S450) des Verstärkungsfaktors mit einem Bestimmen eines aktuellen Verstärkungsfaktors durch Berechnen eines gleitenden Durchschnittswerts über eine vordefinierte Anzahl vorheriger Verstärkungsfaktoren einhergeht, wobei die vorherigen Verstärkungsfaktoren durch Vergleichen des ursprünglichen Audiopegels und des tatsächlichen Audiopegels jeweiliger vorheriger Zeitabschnitte der ersten Audiospur bestimmt werden.

11. Verfahren nach einem der Ansprüche 1 bis 10, das weiter Synchronisieren der ersten und der zweiten Audiospur basierend auf jeweiligen Zeitstempeln umfasst, die in den Rundfunk-Feed und die zweite Audiospur eingeprägt sind.

12. Einrichtung, die einen Prozessor und einen an den Prozessor gekoppelten Speicher umfasst, wobei der Prozessor dazu angepasst ist, alle Schritte des Verfahrens nach einem der Ansprüche 1 bis 11 durchzuführen.

13. Computerprogramm, das Anweisungen umfasst, die, wenn sie von einer Rechenvorrichtung ausgeführt werden, die Rechenvorrichtung veranlassen, die Schritte des Verfahren nach einem der Ansprüche 1 bis 11 durchzuführen.

14. Computerlesbares Speichermedium, das das Computerprogramm nach Anspruch 13 speichert.

## Revendications

1. Procédé de traitement audio dans un dispositif terminal HbbTV, le procédé comprenant :
la réception (S410) d'un flux de diffusion décodé, le flux de diffusion décodé incluant une première piste audio ;
la réception (S420) d'un contenu HbbTV se rapportant au flux de diffusion, le contenu HbbTV comprenant une deuxième piste audio ;
l'extraction (S430) d'informations liées au niveau à partir du flux de diffusion décodé, dans lequel les informations liées au niveau sont intégrées dans le flux de diffusion décodé et permettent d'obtenir une indication d'un niveau audio d'origine de la première piste audio ;
l'analyse (S440) de la première piste audio pour déterminer un niveau audio réel de la première piste audio ;
la détermination (S450) d'un facteur de gain sur la base du niveau audio réel et du niveau audio d'origine ; et
la génération (S460) d'une troisième piste audio pour une sortie par le dispositif terminal HbbTV sur la base de la première piste audio, de la deuxième piste audio et du facteur de gain.

2. Procédé selon la revendication 1, dans lequel l'extraction (S430) des informations liées au niveau à partir du flux de diffusion décodé implique :
l'identification d'un filigrane numérique dans le flux de diffusion décodé ; et
l'analyse du filigrane numérique pour déduire les informations liées au niveau.

3. Procédé selon la revendication 1 ou 2,
dans lequel les informations liées au niveau indiquent le niveau audio d'origine de la première piste audio ; ou
dans lequel le contenu HbbTV est reçu à partir d'un serveur HbbTV, et les informations liées au niveau comprennent des informations de référence pour obtenir l'indication du niveau audio d'origine de la première piste audio à partir du serveur HbbTV.

4. Procédé selon l'une quelconque des revendications 1 à 3, dans lequel l'analyse (S440) de la première piste audio implique l'analyse d'échantillons audio de la première piste audio.

5. Procédé selon l'une quelconque des revendications 1 à 4, dans lequel l'analyse (S440) de la première piste audio implique l'application d'un algorithme de mesure de niveau à la première piste audio.

6. Procédé selon l'une quelconque des revendications 1 à 5, dans lequel la détermination (S450) du facteur de gain implique la comparaison du niveau audio d'origine et du niveau audio réel pour déduire le facteur de gain.

7. Procédé selon l'une quelconque des revendications 1 à 6, dans lequel la génération (S460) de la troisième piste audio implique :
l'ajustement du niveau audio de la deuxième piste audio sur la base du facteur de gain ; et
le mélange de la première piste audio et de la deuxième piste audio à niveau ajusté, ou le remplacement temporaire de la première piste audio par la deuxième piste audio à niveau ajusté.

8. Procédé selon l'une quelconque des revendications 1 à 7, dans lequel l'extraction (S430) des informations liées au niveau et l'analyse de la première piste audio sont effectuées pour chaque portion de temps d'une pluralité de portions de temps consécutives ; et/ou
dans lequel, si les informations liées au niveau sont extraites à partir du flux de diffusion décodé dans une portion de temps donnée, la première piste audio est analysée dans la même portion de temps donnée.

9. Procédé selon la revendication 8 lorsqu'elle dépend de la revendication 6, dans lequel le facteur de gain est déterminé dans la portion de temps donnée et dans lequel le facteur de gain est utilisé pour mélanger la première piste audio et la deuxième piste audio à niveau ajusté, ou pour remplacer temporairement la première piste audio par la deuxième piste audio à niveau ajusté lors d'une portion de temps ultérieure.

10. Procédé selon la revendication 1, dans lequel la détermination (S450) du facteur de gain implique la détermination d'un facteur de gain actuel en calculant une moyenne glissante sur un nombre prédéfini de précédents facteurs de gain, dans lequel les précédents facteurs de gain sont déterminés en comparant le niveau audio d'origine et le niveau audio réel de précédentes portions de temps respectives de la première piste audio.

11. Procédé selon l'une quelconque des revendications 1 à 10, comprenant en outre la synchronisation des première et deuxième pistes audio sur la base d'horodatages respectifs imprimés sur le flux de diffusion et la deuxième piste audio.

12. Appareil comprenant un processeur et une mémoire couplée au processeur, dans lequel le processeur est adapté pour réaliser les étapes du procédé selon l'une quelconque des revendications 1 à 11.

13. Programme d'ordinateur comprenant des instructions qui, lorsqu'elles sont exécutées par un dispositif informatique, amènent le dispositif informatique à réaliser les étapes du procédé selon l'une quelconque des revendications 1 à 11.

14. Support de stockage lisible par ordinateur stockant le programme d'ordinateur selon la revendication 13.
